Europäisches Patentamt

European Patent Office

Office européen des brevets

(11) Publication number: **0 351 959 A2**

# (12) EUROPEAN PATENT APPLICATION

(21) Application number: **89306327.1**

(22) Date of filing: **22.06.89**

(51) Int. Cl.⁴: **G06F 13/12**

(30) Priority: **20.07.88 GB 8817243**

(43) Date of publication of application:
**24.01.90 Bulletin 90/04**

(84) Designated Contracting States:
**BE DE ES FR GR IT LU NL SE**

(71) Applicant: **GEC PLESSEY
TELECOMMUNICATIONS LIMITED**
**P.O. Box 53 Telephone Road**
**Coventry, CV3 1HJ(GB)**

(72) Inventor: **Niblock, John Andrew "Nimbrethil"**
**56A Birchley Heath Road Birchley Heath**
**Nuneaton Warwickhsire, CV10 0QY(GB)**
Inventor: **Kidger, Roy Andrew**
**1 Framlingham Grove**
**Kenilworth Warwickshire, CV8 2PS(GB)**
Inventor: **Middleton, Allan**
**146 Bridgeacre Gardens**
**Coventry West Midlands CV3 2NP(GB)**

(74) Representative: **MacKenzie, Ian Alastair
Robert**
**The General Electric Company, p.l.c. Central
Patent Department Wembley Office Hirst
Research Center East Lane**
**Wembley Middlesex HA9 7PP(GB)**

(54) **Multi-channel controller.**

(57) The invention concerns a multi-channel controller for performing the transfer of data between memory and the interfaces of microprocessor or computer systems. The controller comprises a logic circuit (25) into which multi-channel data can be fed and further including a set (20) of interconnected parallel shift registers including an input register (1) for receiving data from the logic circuit and an output register (n) the output of which is connected to said logic circuit (25). A clock (26) clocks the registers (20) so that on a first clock pulse data is entered into said input register, at a second clock pulse the data in said input register is transferred to the adjacent register in the set so that after N clock pulses the data appears at the outputs of the said output register, the logic circuit (25) being operative to perform logical operations on the data from said output register between said clock signals and to output the results of said logical operations.

# MULTI-CHANNEL CONTROLLER

The present invention concerns a multi-channel controller for performing data transfers between memory and the interfaces of microprocessors or computer systems. It is particularly applicable to providing a bi-directional serial channel interface for use in a digital telephone exchange. Such exchanges have to handle a number of different channels simultaneously. In previous systems this has meant a duplication of the circuitry required to handle the channels and to initiate access between memory and peripheral interfaces.

The present invention has for an object the alleviation of this problem by enabling a single set of control and combinatorial logic to handle a plurality of channels. An advantage of this approach is that the logic required for the plurality of channels can be implemented as a Very Large Scale Integrated Circuit. Another advantage of the present invention which will become apparent after the following description is that the detailed working of the chip implementation of the invention is such that it can operate as a set of bi-directional serial channel controllers with a common serial bi-directional output with the detailed working of the chip invisible from the outside.

Accordingly the present invention consists in a multi-channel controller for performing the transfer of data between memory and the interfaces of microprocessors or computer systems,the controller comprising a logic circuit into which multi-channel data can be fed, a set of interconnected parallel shift registers including an input register for receiving data from the logic circuit and an output register the output of which is connected to said logic circuit, a clock for clocking the registers so that on a first clock pulse data is entered into said input register, at a second clock pulse the data in said input register is transferred to the adjacent register in the set so that after N clock pulses the data appears at the outputs of the said output register, the logic circuit being operative to perform logical operations on the data from said output register between said clock signals and to output the results of said logical operations.

In order that the present invention may be more readily understood various embodiments thereof will now be described by way of example and with reference to the accompanying drawings, in which

Figure 1 is a block diagram of a multi-channel controller according to the present invention,

Figure 2 is a block diagram of a second embodiment, and

Figure 3 shows an arrangement for maximising channel usage, and

Figure 4 is a block diagram showing how controllers according to the invention can be combined in a multiplexed digital data transmission system.

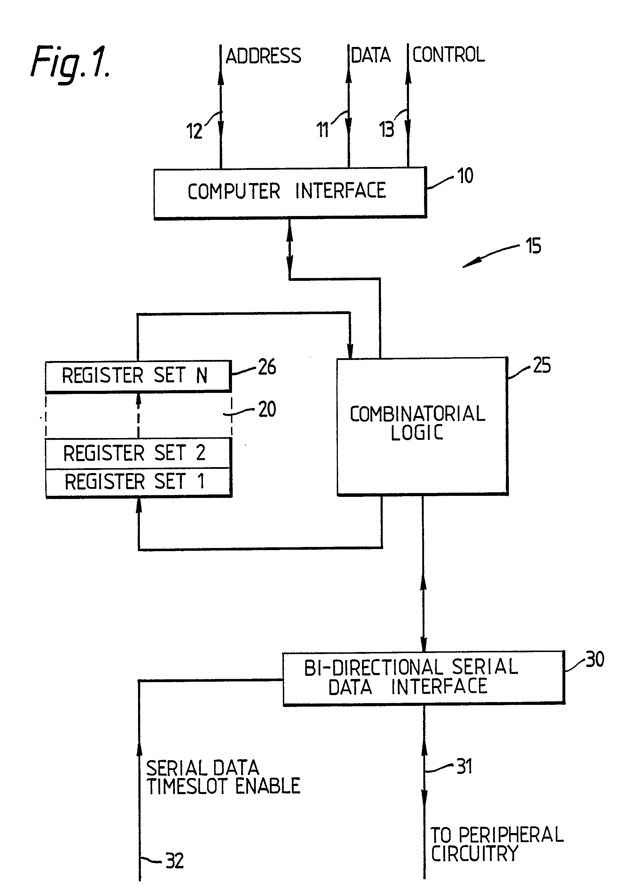

Referring now to Figure 1 of the drawing this shows a computer interface 10. This interface 10 can be designated for any microprocessor or computer system. A typical example would be for a MOTOROLA 68020 (RTM) microprocessor and would consist of 32 bi-directional data lines, 20 address lines and the lines associated with the microprocessor bus. These lines are respectively shown as data lines 11, address lines 12 and control lines 13. Naturally these numbers are only exemplary and depend on the purpose of the controller and the microprocessor or computer system with which it is to be used.

The multi-channel controller itself is generally indicated at 15. In the system being described data transfer accesses to or from the controller 15 can be initiated by the controller itself or by the associated microprocessor or computer. Thus predetermined addresses are allocated in the controller 15 to allow the associated microprocessor or computer to write and read the control information from controller 15.

The main feature of controller 15 is the provision of a set of parallel shift registers 20 which contains the data relating to the number of channels which are to be handled by the controller 15. These registers hold the stored information for each channel controlled by controller 15. The individual registers in the array are not pre-allocated to specific channels but are used as a parallel set of shift registers in which time is allocated into equal slots for each channel. The data for each channel thus circulates in the array and is successively presented to a combinational logic circuit 25. The data is circulated through the registers in response to clock signals indicated at 26.

The data presented to logic circuit 25 at the beginning of each successive period is derived from register n and presented to circuit 25. At the end of each clock period the results of the logical operation are clocked into the register 1 of the array 20. These results will be transferred successively through the individual registers at each successive clock until they will appear again in register n for presentation to combinational logic circuit 25. It can be seen that the register set 20 acts as a circulating memory.

The maximum number of channels which can be handled by the controller is limited by the number of circuit elements required to provide the additional sets of registers in array 20, and by the speed of the technology with which the system is to be implemented. The data thus has a certain time period equal to one clock period to propogate through the combinational logic circuit 25. The data must be valid at the inputs to register 1 by the end of the clock period. One result of this arrangement is the N sets of sequential data can be processed sequentially using one set of combinational and shift register logic. In a particular embodiment the controller is capable of handling 4 channels. When the controller is in operation the data can be visualised as moving horizontally through the registers in the array 20 in either direction.

Associated with the combinational logic circuit 25 are the outgoing and incoming data paths for each of the channels being controlled by it. Each such path includes a bi-directional serial data interface 30 connected by a line 31 to appropriate peripheral circuitry and enabled by signals on a serial data time slot input line 32. Each channel can be a HDLC type 64 Kbit/second data link.

It will be appreciated that the greater the value of N the greater the efficiency of the use of a single set of combinational logic becomes. In the embodiment being described the value of N is 4 and a clock frequency of 12.5 M $H_z$ is used.

The combinational logic circuit is capable of performing any required logical function in respect of the data stored in the register set 20 or of incoming data.

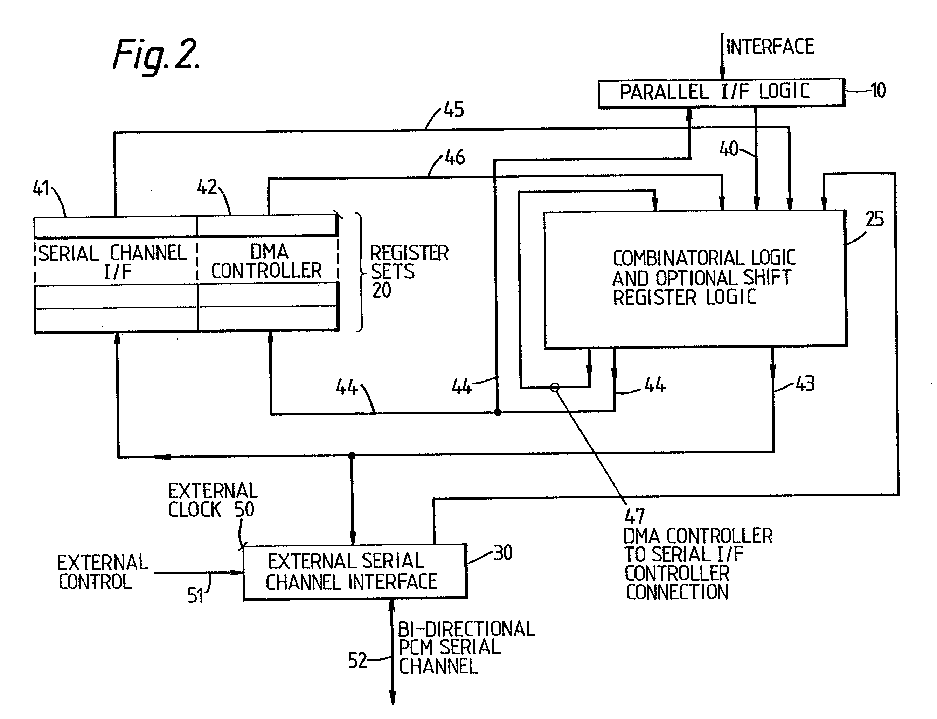

Referring now to Figure 2 of the drawings this shows a combined DMA (Direct Memory Access) Controller and Serial Interface Controller according to the present invention.

As in the Figure 1 embodiment there is a parallel interface control circuit 10. This circuit 10 provides an interface between the controller and the processors of the system. Interface circuit 10 provides a data input to the logic circuit 25 via a line 40. Circuit 25 also contains the logic for controlling the associated arrays of shift registers 20. In this embodiment there are two sets of parallel shift registers which have been labelled 41 and 42. There are two lines 43, 44 leading from Circuit 25 to respective sets 41, 42. Line 43 carries data regarding direct memory access and line 44 data regarding the serial channel interface. The two sets of parallel registers operate in the manner described with reference to Figure 1 so that at the end of each clock period data is presented by the registers N of the two sets 41,42 to inputs of circuit 25 via lines 45, 46. Output line 44 of circuit 25 is branched and also provides an input to interface circuit 10. Line 43 from circuit 25 is also branched and provides an input to an external serial channel interface 30. Each of the register sets 41, 42 operates in exactly the same manner as the single set 20 in Figure 1. However a degree of "handshaking" is required between the serial channel interface function and the Direct Memory Access function. This is provided by line 47 which interconnects the parts of the logic circuit 25 which respectively handle serial channel interface calculations and DMA calculations. The interface 30 has an external clock 50 and an external control input 51. Interface 30 provides an interface between a bi-directional serial link 52 and the multi-channel controller.

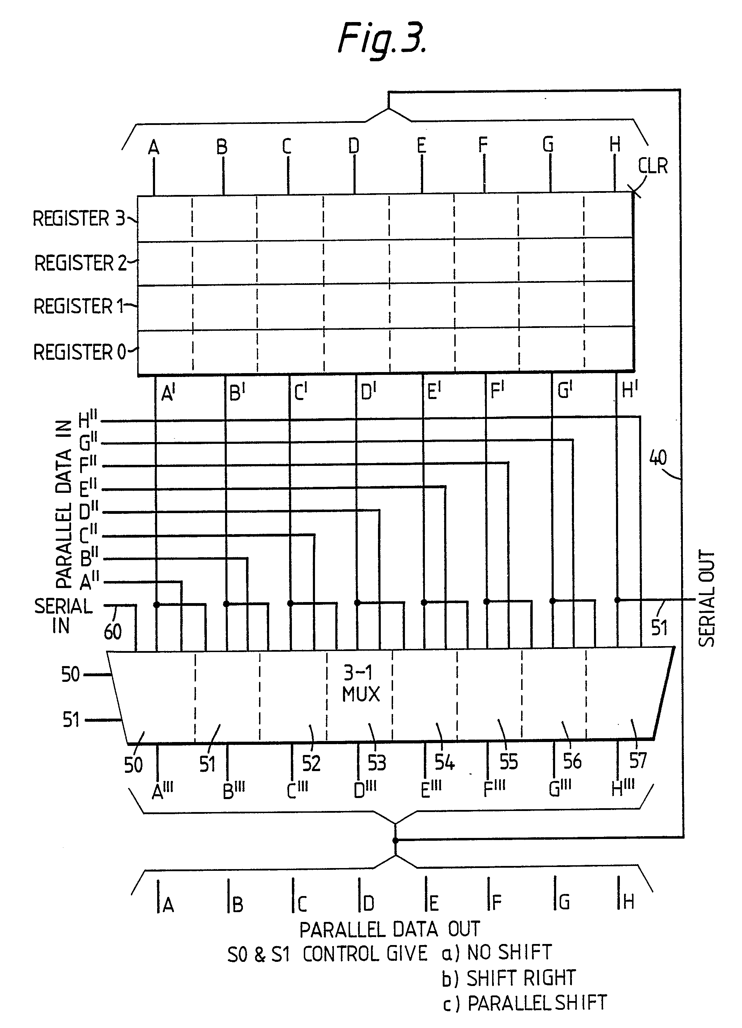

Figure 3 of the drawings shows an arrangement of registers which can function in a manner similar to that of the registers in the embodiment of Figure 1, but in which data is input in serial and/or parallel form. The data can also be output in both serial and parallel manner. As in Figure 1 the register set has four registers, 0, 1, 2 and 3. In this embodiment each register is 8 bits wide. However there is no arbitrary limit in the width of the register in the register set as it is defined purely by the amount of data bits required to perform the desired logic functions. In the embodiment of Figure 3 it can be seen that eight bits A - H can be clocked into the register bank 3 with 8 parallel outputs $A'$ - $H'$ appearing at the output of register bank 0. These outputs are each supplied to an individual one of an array of 8 3-1 multiplexers 50 - 57. Multiplexer 50 has an input 60 for serial data and its third input is provided by one bit of an 8-bit parallel data input stream $A''$ - $H''$ with each of the other multiplexers receiving one bit of this parallel stream. Each of the parallel output lines leading from register 0 to one of the multiplexers 50 - 57 is branched so that it is also connected to the adjacent multiplexer. Thus multiplexer 53 receives, per clock period, one input bit $D'$ from register 0, one input bit $D''$ from the parallel input data stream, and one input $C'$ from register 0.

The array of multiplexers 50 -57 is provided with a pair of control inputs S0 and S1. These inputs can cause three different logical operations in the multiplexer array. These are respectively:
a) No shift
b) Shift right and
c) parallel load.
The outputs $A''$ - $H''$ of the multiplexer array are both returned to the register array via a bus 40 as the parallel input for the next clock period and also provide parallel output of the system. The serial output is provided at line 61.

Figure 3 shows how the parallel shift register arrangement described in basic form with reference to Figure 1 can also be used in conjunction with the logic circuit 25 to provide a parallel load 8 bit serial shift register function for each of the four channels being handled.

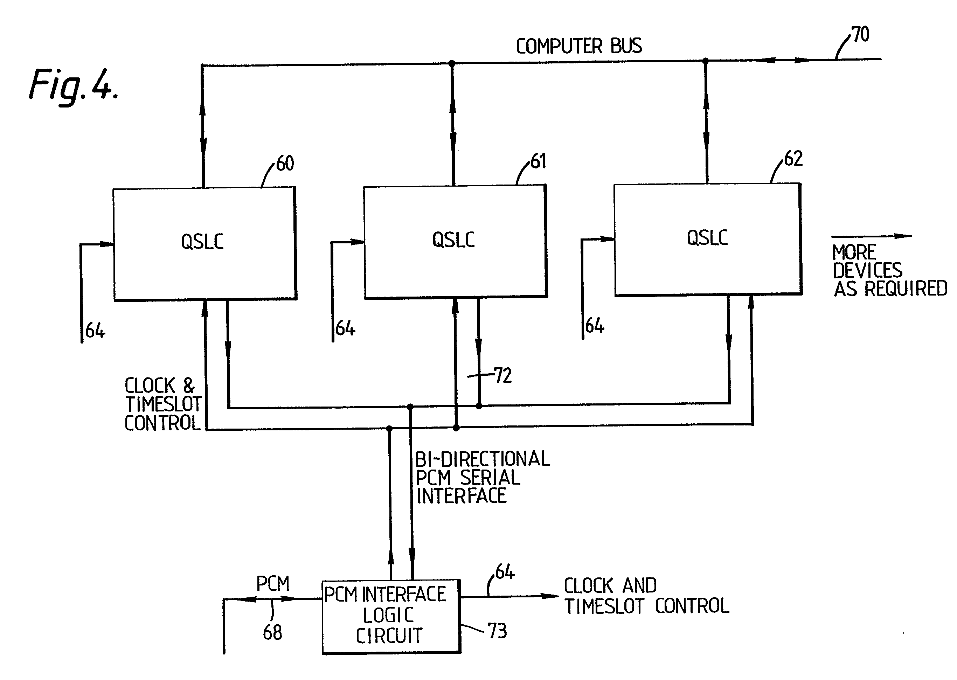

As previously mentioned interface controllers according to the present invention are particularly applicable to use in digital telephone systems where a number of different channels have to be handled simultaneously. Such a system is shown in block form in Figure 4 of the drawings. When used in a digital telephone system the interface controller is known as a Quad Signalling Link Controller (QSLC) and provides four HDLC-type 64 Kbit/Second serial data channels or links.

A typical Pulse Code Modulation (PCM) stream with which controllers according to the present invention can be interfaced carries 32 64 kbit/second streams time division multiplexed together into a single 2 Mbit/second stream. This PCM stream is divided into frames in which each of the 32 channels is allocated a timeslot with each time slot in the frame carrying 8 bits. Accordingly a single frame contains 256 bits. As already mentioned one QSLC circuit of the kind already described is capable of handling four 64 Kbit/second data streams. Figure 4 of the drawings shows how a number of QSLC's can be combined to handle numbers of 64 K/bit data streams which are greater than 4. As is apparent 8 QSLC's are required to handle all 32 channels of a 2Mbit/second PCM stream of the kind described.

The basic elements of an interface between a number of QSLCs and a PCM stream is shown in Figure 4 of the drawings. In this figure each of the devices marked QSLC is equivalent to a single controller of the type described with reference to Figure 1 of the drawings.

In figure 4 the main computer bus is shown at 70 and is connected to 3 QSLC circuits 60, 61, 62 each of which has a clock and timeslot control input 64. As already mentioned the number of QSLC circuits can be increased in accordance with requirements. Each of the QSLC circuits is coupled via a bi-directional PCM serial interface 72 to a PCM interface logic circuit 73 at which the clock and timeslot control signal 64 is generated. Interface 72 links the QSLC circuit to a bi-directional PCM stream 68.

## Claims

1. A multi-channel controller for performing the transfer of data between memory and the interfaces of microprocessor or computer systems, the controller comprising a logic circuit (25) into which multi-channel data can be fed and characterised in that the controller includes a set (20) of interconnected parallel shift registers including an input register (1) for receiving data from the logic circuit and an output register (n) the output of which is connected to said logic circuit (25), a clock (26) for clocking the registers (20) so that on a first clock pulse data is entered into said input register, at a second clock pulse the data in said input register is transferred to the adjacent register in the set so that after N clock pulses the data appears at the outputs of the said output register, the logic circuit (25) being operative to perform logical operations, on the data from said output register between said clock signals and to output the results of said logical operations.

2. A controller as claimed in Claim 1, and further characterised in that it includes a first bi-directional serial data interface (10) connected to an input of said logic circuit (25), and a second bi-directional serial interface (30) connected to an output of said logic circuit.

3. A controller as claimed in Claim 1, and further characterised in that means are provided whereby parallel data can be clocked into a register of said set of interconnected parallel registers and read in parallel out of another of the registers of said set.

4. A controller as claimed in Claim 3, and further characterised in that it includes a set of multiplexers (50) each associated with outputs from two or more of the parallel outputs of said another register.

5. A controller as claimed in Claim 4, and further characterised in that each of said multiplexers has an additional input for receiving data which has not passed through said set of registers.

6. A controller as claimed in Claim 1, and further characterised in that it includes a Direct Memory Access (DMA) Controller (42) comprising second set of parallel shift registers so interconnected with said logic circuit (25) so as to receive DMA data from said logic circuit and to return data to said logic circuit (25), said clocking means in operation of the Controller being operative to clock both said sets of registers.

*Fig.1.*

ADDRESS    DATA   CONTROL

12       11    13

COMPUTER INTERFACE    10

15

REGISTER SET N    26

20

REGISTER SET 2

REGISTER SET 1

COMBINATORIAL LOGIC    25

BI-DIRECTIONAL SERIAL DATA INTERFACE    30

31

SERIAL DATA TIMESLOT ENABLE

TO PERIPHERAL CIRCUITRY

32

Fig.2.

# Fig.3.

PARALLEL DATA OUT

S0 & S1 CONTROL GIVE  a) NO SHIFT
b) SHIFT RIGHT
c) PARALLEL SHIFT

# Fig.4.

COMPUTER BUS ← 70

60
QSLC

61
QSLC

62
QSLC

MORE
DEVICES
AS REQUIRED

64

64

64

CLOCK &
TIMESLOT
CONTROL

72

BI-DIRECTIONAL
PCM SERIAL
INTERFACE

PCM

PCM INTERFACE
LOGIC
CIRCUIT

64

CLOCK AND
TIMESLOT CONTROL

68

73

EP 0 351 959 A2